# EUROPEAN PATENT SPECIFICATION

(11) **EP 3 798 781 B1**
(45) Date of publication and mention of the grant of the patent: **01.05.2024**
(21) Application number: 19807931.1
(22) Date of filing: 22.05.2019
(51) Int. Cl.: G05D 1/02

(54) **AUTOMATIC MOWER AND CONTROL METHOD**
AUTOMATISCHER MÄHER UND STEUERUNGSVERFAHREN
TONDEUSE AUTOMATIQUE ET PROCÉDÉ DE GUIDAGE

(30) Priority: 22.05.2018 CN 201810497076
(43) Date of publication of application: 31.03.2021
(73) Proprietor: Positec Power Tools (Suzhou) Co., Ltd, Suzhou, Jiangsu 215123 (CN)
(72) Inventor: ANDRIOLO, Paolo, 36100 Vicenza (IT); DALFRA, Davide, 36100 Vicenza (IT)
(74) Representative: Kilburn & Strode LLP
(86) International application number: PCT/CN2019/087989
(87) International publication number: WO 2019/223725

(56) References cited:
- EP-A1- 3 199 009
- WO-A1-2017/166971
- WO-A2-2007/109624
- CN-A- 103 282 848
- CN-A- 105 911 981
- CN-A- 107 479 546
- US-A1- 2016 366 818

## Description

### BACKGROUND

### Technical Field

The present invention relates to the field of intelligent control, and in particular, to an autonomous lawnmower and a steering method thereof.

### Related Art

An autonomous lawnmower is a robot that uses sensors to sense a surrounding environment and its own status, perceives and determines a complex environment, and makes decisions and plans accordingly to implement a target-oriented movement, so as to complete a particular task. The autonomous lawnmower may run by receiving an instruction from a user or may run automatically according to a run program.

Generally, the autonomous lawnmower works within a boundary wire set by the user. The autonomous lawnmower recognizes a boundary of a working area by detecting a signal generated by the boundary wire. When detecting the boundary wire, the autonomous lawnmower starts steering to leave the boundary wire to prevent the autonomous lawnmower from moving and working outside the working area. Most commercial autonomous lawnmowers travel along random paths, that is, travel along straight lines within a working range. When encountering an obstacle or a boundary wire, an autonomous lawnmower first brakes to stop traveling, then steers randomly or according to a predetermined program, and then starts to leave. The autonomous lawnmower can only sense that the autonomous lawnmower has encountered an obstacle or a boundary but cannot know its original traveling direction and an exact position in the working area. Therefore, the autonomous lawnmower cannot appropriately determine a preferred direction in which the autonomous lawnmower is to steer next. As a result, the autonomous lawnmower can only randomly move in a narrow area and it takes a long time for the autonomous lawnmower to leave the area, or the autonomous lawnmower may even fail to leave the area, causing increased mechanical wear to an autonomous traveling device and a shorter service life.

It is complex and inconvenient for a user to arrange the boundary wire. The user needs to arrange the boundary wire at a distance from an actual boundary according to the guidance of the manual, so as to prevent the autonomous lawnmower from traveling beyond a safety boundary and ensure the working safety. If the boundary wire is not arranged, a boundary of the working area may be directly adjacent to a dangerous area, and the autonomous lawnmower cannot be far away from the dangerous area through user settings. As a result, danger may occur when the autonomous lawnmower approaches the dangerous area or during steering, leading to a fault.

WO2017166971A1 discloses an automatic traveling device controlled such that a central axis of the device always forms an acute angle or a right angle with one side of the boundary when steering is complete, and another side of the boundary forms an acute angle or a right angle with the central axis of the automatic traveling device when steering starts. The boundary sensing element may be an inductance symmetrically mounted on both sides of the central axis.

EP3199009A1 discloses a self-moving robot comprising an image capturing device, disposed on a machine body and comprising more than two cameras for collecting image information of an external environment; an image splicing circuit, configured to overlap and clip the image information collected by the two cameras to form spliced image information; and a control device, configured to control a direction of the device according to the spliced image information.

### SUMMARY

To overcome disadvantages in the prior art, the problem to be resolved in the present invention is to provide a boundary-less autonomous lawnmower with a safe and efficient steering process.

The invention is defined by the claims.

A technical solution adopted in the present invention to resolve problems in the prior art is as follows:

An autonomous lawnmower is provided, traveling and working in a working area. The autonomous lawnmower includes: a housing, including a front portion in a moving direction of the autonomous lawnmower; a traveling module, mounted in the housing, driving the autonomous lawnmower to travel and steer, the traveling module comprising two drive wheels, each connected to an independent drive motor, whereby during steering, the drive motors drive the two drive wheels at different speeds or in different directions; a surface recognition module, mounted in the housing, and detecting a surface traveled by the autonomous lawnmower, a detection area of the surface recognition module including a surface in front of the traveling module, a surface in the working area being a working surface, a surface outside the working area being a non-working surface, a boundary of the working area being formed between the working surface and the non-working surface; an energy module, mounted in the housing, supplying energy to the autonomous lawnmower; and a control module, electrically connected to the traveling module and the surface recognition module, determining a position relationship between the autonomous lawnmower and the boundary according to a signal sent by the surface recognition module, if a preset position relationship is met, enabling the traveling module to perform steering to travel into the working area, wherein a maximum distance required for steering is determined in the case when the two drive motors rotate at the same speed and in the same direction perpendicular to the boundary (3), and the distance between the detection area and the travelling module is greater than a first preset distance which is greater than or equal to the maximum distance;where if the moving direction forms an acute angle with the boundary in the clockwise direction, steering is clockwise, so that when steering is completed, the moving direction forms an acute angle with the boundary in the counterclockwise direction, and if the moving direction forms an obtuse angle with the boundary in the clockwise direction, steering is counterclockwise, so that when steering is completed, the moving direction forms an obtuse angle with the boundary in the counterclockwise direction.

The surface recognition module may include at least two surface recognition sensors symmetrically disposed with respect to an axis in the moving direction.

If a surface recognition sensor on the left side of the axis first detects the non-working surface, the control module determines that the moving direction forms an acute angle with the boundary in the clockwise direction; and if a surface recognition sensor on the right side of the axis first detects the non-working surface, the control module determines that the moving direction forms an obtuse angle with the boundary in the clockwise direction.

In one of the embodiments, the surface recognition module recognizes a lawn.

In one of the embodiments, the surface recognition sensor includes at least one of an optical sensor, a radar sensor, a capacitive sensor, and an image sensor.

In one of the embodiments, during steering, the control module controls the traveling module to keep traveling in the working area.

In one of the embodiments, the first preset distance is between 20 cm and 80 cm.

In one of the embodiments, an angle between a detection angle of the surface recognition sensor and the height direction is less than 75 degrees and greater than 30 degrees.

In one of the embodiments, according to a signal that is sent by the surface recognition module and indicates that the non-working surface is detected, the control module controls the traveling module to reverse a second preset distance and then steer.

In one of the embodiments, the surface recognition module includes at least one of a surface recognition sensor, and a detection area of the surface recognition sensor is symmetric with respect to an axis in the moving direction.

In one of the embodiments, the surface recognition module includes an image sensor, and the control module determines an angle relationship between the moving direction and the boundary in the clockwise direction according to a relative relationship, detected by the image sensor, between the axis and the boundary.

In one of the embodiments, an angle of steering is less than 180 degrees and greater than or equal to 90 degrees.

A steering method of an autonomous lawnmower is provided, where the autonomous lawnmower is configured to travel and work in a working area defined by a boundary formed by a lawn and a non-lawn, a surface in the working area is a lawn, and the method includes the following steps: determining a maximum distance required for steering in the case when the two drive motors rotate at the same speed and in the same direction perpendicular to the boundary (3), and arranging the distance between the detection area and the travelling module to be greater than a first preset distance which is greater than or equal to the maximum distance; traveling, by the autonomous lawnmower, to the boundary; detecting a surface traveled by the autonomous lawnmower; determining a position relationship between the autonomous lawnmower and the boundary based on the detection of a non-lawn; and determining an angle relationship between the autonomous lawnmower and the boundary when the position relationship between the autonomous lawnmower and the boundary meets a preset position relationship, where steering is controlled according to the angle relationship to enable the autonomous lawnmower to travel into the working area, if a moving direction of the autonomous lawnmower forms an acute angle with the boundary in the clockwise direction, steering is clockwise, so that when steering is completed, the moving direction forms an acute angle with the boundary in the counterclockwise direction, and if the moving direction forms an obtuse angle with the boundary in the clockwise direction, steering is counterclockwise, so that when steering is completed, the moving direction forms an obtuse angle with the boundary in the counterclockwise direction.

In one of the embodiments, after steering is started and before steering is completed, the autonomous lawnmower travels a second preset distance along an inner side of the boundary.

In one of the embodiments, the second preset distance is between 20 cm and 100 cm.

Compared with the prior art, the present invention has the following beneficial effects:
When no boundary wire is arranged on a boundary of a working area of an autonomous lawnmower, an angle relationship between the autonomous lawnmower and the boundary is determined by detecting a surface in front of the autonomous lawnmower, so that a traveling module of the autonomous lawnmower can start steering without moving beyond the boundary. A steering manner is determined according to an angle relationship between a moving direction of the autonomous lawnmower and the boundary in the clockwise direction at the beginning of steering, so that when steering is completed, the angle relationship between the moving direction of the autonomous lawnmower and the boundary is still an obtuse angle consistent with the obtuse angle relationship at the beginning of steering, or is still an acute angle consistent with the acute angle at the beginning of steering. In this way, the autonomous lawnmower can keep traveling in the working area and move from one area to another area during steering, but does not repeatedly work in the same area, thereby improving the working efficiency while ensuring safety.

### BRIEF DESCRIPTION OF THE DRAWINGS

The foregoing objects, technical solutions, and beneficial effects of the present invention can be implemented with reference to the accompanying drawings below:
FIG. 1 is a schematic diagram of an autonomous working system according to an embodiment of the present invention.
FIG. 2 is a schematic structural diagram of an autonomous lawnmower according to an embodiment of the present invention.
FIG. 3 is a schematic structural diagram of an autonomous lawnmower according to an embodiment of the present invention.
FIG. 4 is a diagram of path selection of an autonomous lawnmower according to an embodiment of the present invention.
FIG. 5 is a diagram of path selection of an autonomous lawnmower according to an embodiment of the present invention.
FIG. 6 is a diagram of path selection of an autonomous lawnmower according to an embodiment of the present invention.
FIG. 7 is a diagram of path selection of an autonomous lawnmower passing through a narrow area according to an embodiment of the present invention.
FIG. 8 is another diagram of path selection of an autonomous lawnmower passing through a narrow area according to an embodiment of the present invention.

### DETAILED DESCRIPTION

Specific implementations of the present invention are described below in detail with reference to the accompanying drawings.

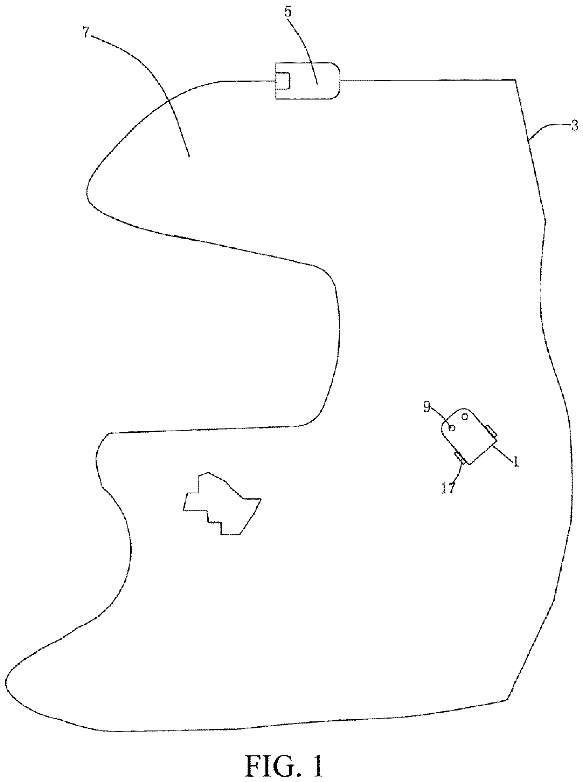

As shown in FIG. 1, in an embodiment of the present invention, an autonomous working system includes an autonomous lawnmower 1 and a base station 5. The autonomous lawnmower 1 travels and works in a working area 7. The base station 5 is used for parking the autonomous lawnmower. Especially, the autonomous lawnmower 1 returns to replenish energy when the energy is insufficient. The autonomous lawnmower 1 includes a traveling module 17, a working module, an energy module 33, a control module 19, and the like.

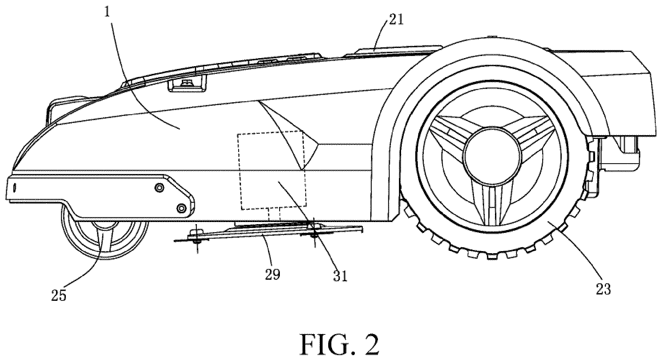

As shown in FIG. 2, the traveling module 17 is configured to drive the autonomous lawnmower 1 to travel in the working area 7, and is usually formed by a wheel set mounted on the autonomous lawnmower 1 and a traveling motor for driving the wheel set. In this embodiment, the traveling module 17 includes a wheel set mounted below the housing. The wheel set includes two drive wheels 23 respectively located on both sides in the rear of a housing 21. The wheel set also includes two auxiliary wheels 25 respectively located on both sides in the front of the housing 21. The traveling module 17 further includes a drive motor connected to the drive wheel. The drive motor is responsible for driving the drive wheel 23 to rotate to drive the autonomous lawnmower 1 to travel, and the drive motor is further responsible for driving the drive wheel 23 to steer. In the autonomous lawnmower 1, each of the two drive wheels 23 is independently connected to one drive motor. The rotational speed of the drive motor is controlled by a control module 19. When the control module 19 instructs the two drive motors to rotate at the same speed and in the same direction, the autonomous lawnmower 1 travels along a straight line. When the control module 19 instructs the two drive motors to rotate at different speeds or in different directions, the autonomous lawnmower 1 steers, and the autonomous lawnmower 1 steers to the side of a drive wheel with a slower rotational speed or steers to the side of a drive wheel with a rotation direction being correspondingly backward. In some embodiments, the wheel set only includes drive wheels connected to the traveling motor. For example, four drive wheels are respectively located at the front portion and the rear portion of the autonomous lawnmower, and each drive wheel is connected to one traveling motor.

The working module is configured to perform a specific task of the autonomous lawnmower 1. In this embodiment, the working module includes a cutting assembly 29 mounted below the housing 21 and a cutting motor 31 driving the cutting assembly 29 to mow a lawn. The cutting assembly 29 may be a blade connected to a mowing output shaft or a combination of a cutting deck and a blade connected to a mowing output shaft. The specific structure and possible form of the cutting assembly are well known in the industry. Details are not described herein again.

An energy module 33 is configured to supply energy for various work of the autonomous lawnmower 1, and includes a rechargeable battery and a charging connection structure. The charging connection structure may be electrically connected to a charging docking structure on the base station 5, thereby implementing charging. In this embodiment, the energy module 33 is a rechargeable battery located in the housing 21 and a charging plate connected to the rechargeable battery. The charging plate is located in a front portion of the housing and exposed from the housing 21 and is used for being docked to a corresponding charging plate of the base station 5 when the autonomous lawnmower 1 enters the base station 5 to charge the autonomous lawnmower 1. In some embodiments, the charging docking structure may be an inductive wireless docking structure or the like.

The control module 19 is configured to control the autonomous lawnmower 1 to travel and work automatically. In this embodiment, the control module 19 is located in the housing 21 and includes a microcontroller, a memory, and the like. The memory is configured to store a working program of the autonomous lawnmower 1, related parameters in a working process of the autonomous lawnmower 1, information sent back by various sensors and other modules, and the like. The microcontroller is configured to receive a signal sent by another system and calculate and send a corresponding work instruction to each module according to a program built in the memory.

In this embodiment, a surface traveled by the autonomous lawnmower 1 in the working area 7 is a working surface. The working surface is mainly a lawn, and may include barks, fallen leaves, and other objects in a garden. A boundary 3 of the working area 7 is formed by a boundary between the working surface and a non-working surface. The autonomous lawnmower 1 recognizes the working surface and the non-working surface by detecting a surface traveled by the autonomous lawnmower, so as to recognize the boundary 3 of the working area 7, prevent the autonomous lawnmower from traveling beyond the working area 7, and ensure the working safety. The boundary 3 includes an outer boundary of the working area 7. The boundary 3 is usually a closed loop and is surrounded by the non-working surface. The boundary 3 further includes obstacles such as slopes, stones, and trees in the working area 7. In other embodiments, for the obstacles in the working area 7, the control module 19 performs independent control by using a detection signal of an obstacle detection module.

In this embodiment, the autonomous lawnmower 1 includes a surface recognition module 9 for detecting the surface traveled by the autonomous lawnmower 1. The surface recognition module 9 may specifically include detection apparatuses such as an optical sensor, a radar sensor, a capacitive sensor, and an image sensor. The sensors have various detection principles and recognition manners, and various quantities of sensors may be disposed at various positions, which is related to a path planning manner. Therefore, details are described below in detail with reference to specific embodiments and the path planning manner.

Generally, the autonomous lawnmower 1 cruises and mows in the working area 7. Under a normal condition, the autonomous lawnmower 1 travels along a straight line until it is detected that the autonomous lawnmower 1 encounters the boundary 3. If the autonomous lawnmower 1 encounters the boundary 3, the autonomous lawnmower 1 changes a traveling direction to leave the boundary 3 and return to the working area 7 to continue traveling along a straight line until the autonomous lawnmower encounters the boundary 3 again. In the foregoing manner of moving back and forth in the boundary 3, the entire working area 7 is covered for working. When the battery level of the autonomous lawnmower 1 reaches a preset battery level or needs to return to the base station 5 under other circumstances, the control module 19 controls the autonomous lawnmower 1 to look for the base station 5, and returns in a manner of traveling along the boundary 3 or searching for the base station 5 through an external signal, to enable the autonomous lawnmower to be docked to the base station 5 for charging or park at the base station 5. In this embodiment, since the boundary 3 is not a physical boundary arranged by a user, the autonomous lawnmower 1 distinguishes the working surface from the non-working surface by recognizing the surface traveled by the autonomous lawnmower, thereby indirectly determining the position of the boundary 3 instead of directly recognizing the boundary 3. Therefore, in this embodiment, the detecting, by the surface recognition module 9, the boundary 3 is not specifically directly detecting the boundary 3, and also includes detecting, by the surface recognition module 9, the non-working surface.

In this embodiment, the surface recognition module 9 is mounted in front of the traveling module 17. Therefore, when the surface recognition module 9 detects the non-working surface, the traveling module 17 is still in the working area 7. It should be understood that when the surface recognition module 9 detects the non-working surface, the front portion of the housing 21 may have already crossed the boundary 3 and entered a non-working area 7, or may be tangent to the boundary 3 in the height direction and has not entered the non-working area 7, or may not have an intersection point with the boundary 3 in the height direction and still be located in the working area 7. Therefore, in this embodiment, the encountering the boundary 3 is not specifically that the autonomous lawnmower 1 has entered the non-working area and is tangent to the boundary 3 in the height direction.

When the autonomous lawnmower 1 is inside the working area 7 far away from the boundary 3, a surface detected by the surface recognition module 9 is a working surface. The autonomous lawnmower 1 definitely encounters the boundary 3 after traveling a period of time. At this time, the surface recognition module 9 detects the non-working surface or detects both the working surface and the non-working surface. The control module 19 determines a position relationship between the autonomous lawnmower 1 and the boundary 3 according to a detection signal sent by the surface recognition module 9. After traveling to the boundary 3 and reaching a preset position relationship, the autonomous lawnmower 1 steers to leave the boundary 3, and travels into the working area 7. Specifically, the signal sent by the surface recognition module 9 may represent an angle relationship between the autonomous lawnmower 1 and the boundary 3 or may represent the distance between the autonomous lawnmower 1 and the boundary 3 or may represent which side of the autonomous lawnmower 1 is closer to the boundary 3 or may represent several items of the foregoing content. Such items are related to the type and mounting manner of the surface recognition module 9, processing manners of the control module 19 and the detection signal, and the like.

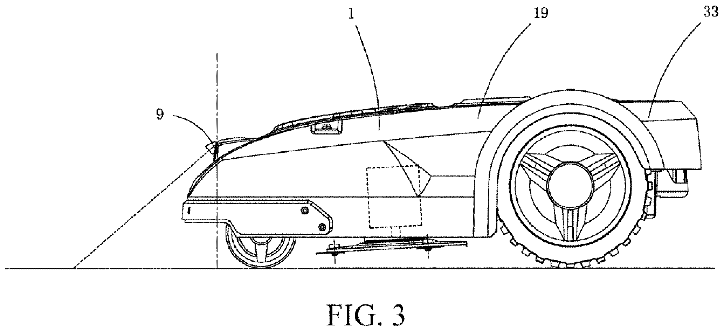

As shown in FIG. 3, in this embodiment, the surface recognition module 9 includes at least one surface recognition sensor. The surface recognition sensor is mounted in the front portion of the housing 21, so that a detection range of the surface recognition sensor includes the front of the traveling module 17. In this embodiment, the front is the front in a moving direction of the autonomous lawnmower 1. The traveling module 17 includes a drive wheel 23 mounted on the rear side of the housing 21 and an auxiliary wheel 25 mounted on the front side of the housing. Therefore, the detection range of the surface recognition sensor specifically includes a surface in front of the auxiliary wheel 25. Since the boundary 3 of the working area 7 is not formed by a boundary wire arranged by the user, the boundary 3 may be a boundary between a lawn and a road, a boundary between a lawn and a flower bed or a boundary between a lawn and a pool. There is no buffer area between such boundaries. When the auxiliary wheel 25 encounters the boundary 3 or after the auxiliary wheel encounters the boundary 3, the surface recognition sensor detects the boundary 3. When the control module 19 controls the autonomous lawnmower 1 to steer, the auxiliary wheel 25 moves outside the working area 7 during steering, leading to unsafe factors. Therefore, in this embodiment, the surface recognition module 9 is mounted in the front portion of the housing 21, to enable a detection area of the surface recognition module to cover an area in front of the auxiliary wheel 25. The area is not specifically an area adjacent to the auxiliary wheel 25, and may only include a part of a surface in front of the traveling module 17 and may be not adjacent to the auxiliary wheel 25. Such an arrangement ensures that the control module 19 recognizes the boundary 3 in advance and controls the auxiliary wheel 25 to make a response, to prevent the autonomous lawnmower 1 from traveling outside the working area 7.

Since a surface recognition sensor 11 detects the working surface when the autonomous lawnmower 1 is far away from the inside of the boundary 3, when the autonomous lawnmower 1 is close to the boundary 3, the surface recognition sensor 11 detects the non-working surface in front of the traveling module 17. In this embodiment, when a signal that is sent by the surface recognition module 9 and indicates that the non-working surface is detected is received, if the control module 19 determines that the autonomous lawnmower 1 and the boundary 3 meet the preset position relationship, the control module 19 controls the drive wheel 25 to steer. If a moving direction of the autonomous lawnmower 1 forms an acute angle with the boundary 3 in the clockwise direction, the control module 19 controls the drive wheel 25 to steer clockwise, so that when steering is completed, the moving direction of the autonomous lawnmower 1 forms an acute angle with the boundary 3 in the counterclockwise direction. If the moving direction of the autonomous lawnmower 1 forms an obtuse angle with the boundary 3 in the clockwise direction, the control module 19 controls the drive wheel 25 to steer counterclockwise, so that when steering is completed, the moving direction of the autonomous lawnmower 1 forms an obtuse angle with the boundary 3 in the counterclockwise direction. In an embodiment, the control module 19 receives the signal that is sent by the surface recognition module and indicates that the non-working surface is detected, that is, determines whether the preset position relationship is met. In an embodiment, when the signal that is sent by the surface recognition module 9 and indicates that the non-working surface is detected is received, the control module 19 may acquire more information form the signal to help determine the positions of the autonomous lawnmower 1 and the boundary 3. If the preset position relationship is not met, the autonomous lawnmower continues traveling and receives the signal, and if the preset relationship is met, steering is started.

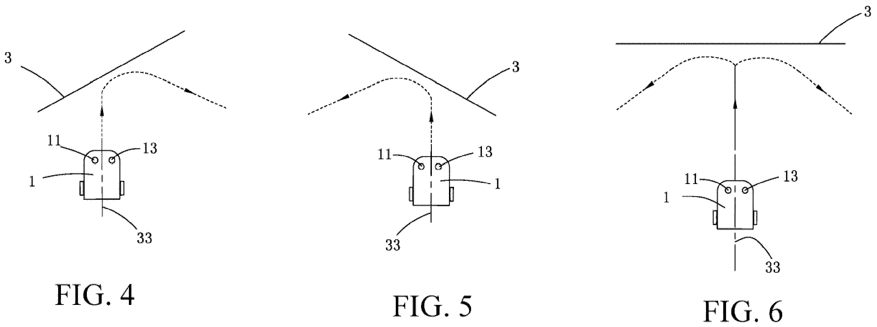

As shown in FIG. 4 to FIG. 6, in an embodiment, the surface recognition module 9 includes two surface recognition sensors. A surface recognition sensor 11 and a surface recognition sensor 13 are symmetrically disposed with respect to an axis 33 in the moving direction of the autonomous lawnmower 1. The moving direction of the autonomous lawnmower 1 herein is a direction of the autonomous lawnmower 1 traveling in a straight line, and generally coincides with a longitudinal direction of the autonomous lawnmower 1. The axis in the moving direction of the autonomous lawnmower 1 is not unique, and the axis may be the central axis of the housing 21 or an axis parallel to the central axis. The surface recognition sensor 11 and the surface recognition sensor 13 are respectively located on the left and right sides of the axis. If the surface recognition sensor 11 on the left side first detects the non-working surface, the control module 19 determines that the left side in the moving direction of the autonomous lawnmower 1 is closer to the boundary 3, that is, the moving direction of the autonomous lawnmower 1 forms an acute angle with the boundary 3 in the clockwise direction. The control module 19 controls the drive wheel 23 to steer right, that is, the autonomous lawnmower 1 steers clockwise, so that when steering is completed, the moving direction of the autonomous lawnmower 1 forms an acute angle with the boundary 3 in the counterclockwise direction. If the surface recognition sensor 13 on the right side first detects the non-working surface, the control module 19 determines that the right side in the moving direction of the autonomous lawnmower 1 is closer to the boundary 3, that is, the moving direction of the autonomous lawnmower 1 forms an obtuse angle with the boundary 3 in the clockwise direction. The control module 19 controls the drive wheel 23 to steer left, that is, the autonomous lawnmower 1 steers counterclockwise, so that when steering is completed, the moving direction of the autonomous lawnmower 1 forms an obtuse angle with the boundary 3 in the counterclockwise direction. If the surface recognition sensor 11 and the surface recognition sensor 13 simultaneously detect the non-working surface, the control module 19 determines that the moving direction of the autonomous lawnmower 1 forms a right angle with the boundary 3, and the control module 19 controls the autonomous lawnmower 1 to steer clockwise or counterclockwise, so that the moving direction of the autonomous lawnmower 1 forms an acute angle, a right angle or an obtuse angle with the boundary 3. After the control module 19 receives the detection signal sent by the surface recognition module 9, no matter how the autonomous lawnmower 1 steers, when steering is completed, the moving direction of the autonomous lawnmower 1 is in the working area 7.

It should be noted that the boundary 3 may be curved on the whole, but the boundary 3 may be considered as a straight line near a specific intersection point. In other words, although the boundary 3 may be curved, when a preset position at which steering is determined is reached, from the intersection point of the moving direction of autonomous lawnmower 1 and the boundary 3, an extension direction of the boundary 3 is a straight line, and the extension direction is tangent to the boundary 3. To more accurately determine an intersection point, in this embodiment, the moving direction of the autonomous lawnmower 1 may be a direction line coinciding with the axis on which the surface recognition sensor 11 or the surface recognition sensor 13 is located.

In this embodiment, a steering angle of the autonomous lawnmower 1 is fixed, and is greater than or equal to 90 degrees and less than 180 degrees, and is preferably slightly greater than 90 degrees, that is, between 90 degrees and 120 degrees. The reason why the steering angle is greater than or equal to 90 degrees is to ensure that when a specific angle value of the foregoing acute angle is not clear, the autonomous lawnmower steers and travels into the boundary 3, and if the angle value can be determined, an appropriate steering angle within 180 degrees may be correspondingly selected according to the value of the acute angle. In this embodiment, if the moving direction of the autonomous lawnmower 1 forms an acute angle with the boundary 3 in the clockwise direction at the beginning of steering, the autonomous lawnmower 1 rotates clockwise by fixed degrees. Throughout the rotation until the rotation ends, an angle between the moving direction of the autonomous lawnmower 1 and the boundary 3 remains an acute angle. During steering, it is ensured that the autonomous lawnmower 1 enters different working areas, so as to prevent the autonomous lawnmower 1 from staying in the same area, thereby improving the working efficiency.

In an embodiment, the autonomous lawnmower 1 includes one surface recognition sensor 11. The control module 19 acquires a position relationship between the autonomous lawnmower 1 and the boundary 3 according to a detection signal of the surface recognition sensor 11. In this embodiment, the control module 19 processes the detection signal sent by the surface recognition sensor 11, to acquire a position relationship such as a distance relationship and an angle relationship between the autonomous lawnmower 1 and the boundary 3.

In an embodiment, when the surface recognition sensor 11 detects the non-working surface, the control module 19 controls the traveling module 17 to reverse a fixed distance and then steer by a fixed angle. After steering is completed, the traveling module moves along a straight line until the surface recognition sensor 11 detects the non-working surface again, and records a distance by which the traveling module moves along a straight line after steering. An angle value between the moving direction of the autonomous lawnmower 1 and the boundary 3 in the clockwise direction is calculated according to the distance by which the traveling module moves along a straight line the fixed distance of reversing, and the fixed angle of steering. In this embodiment, the control module 19 may determine a relationship of an acute angle, a right angle or an obtuse angle according to the angle value, so as to start the steering by the fixed angle. In another embodiment, specific angle values correspond to different steering angles, and the control module performs steering by corresponding angles according to different angle values, thereby further improving the working efficiency.

In an embodiment, the surface recognition module 9 includes a capacitive sensor mounted below the housing 21. When the autonomous lawnmower 1 is working, a capacitance C1 is formed between a probe of the capacitive sensor and a surface below the autonomous lawnmower 1. An electrical signal outputted by the capacitive sensor is related to a medium between two electrodes of the capacitor C1. When a surface below the probe is a non-lawn and when a surface below the probe is a lawn, the media between the two electrodes are different, and the electrical signals outputted by the capacitive sensor are different. In this way, the control module 19 can determine, according to different electrical signals outputted by the capacitive sensor, whether the surface below the probe is a lawn. In other words, the capacitive sensor determines, through contact detection, whether a surface traveled by the autonomous lawnmower 1 is a working surface.

In an embodiment, the surface recognition module 9 includes two capacitive sensors symmetrically disposed with respect to an axis in the moving direction of the autonomous lawnmower 1. When any one of the capacitive sensors detects a lawn, the control module 19 determines the position relationship between the autonomous lawnmower 1 and the boundary 3. In this embodiment, since a distance between a detection area of the capacitive sensor and the traveling module 17 is small, when the capacitive sensor detects the non-working surface, the control module 19 determines that the autonomous lawnmower 1 and the boundary 3 meet the preset position relationship. The control module 19 determines an angle relationship between the autonomous lawnmower 1 and the boundary 3 through a lawn/non-lawn signal sent by the left and right capacitive sensors, so as to control the steering. The specific control logic is described above.

In an embodiment, the surface recognition module 9 includes an optical sensor mounted above or in front of the housing 21. In this embodiment, an infrared light sensor and a visible light sensor are specifically included and detect the surface traveled by the autonomous lawnmower 1. The infrared light sensor detects reflected light in an infrared wave band. The visible light sensor detects radiation light in a red light wave band. Whether the surface traveled by the autonomous lawnmower 1 is a lawn is detected by calculating a vegetation index. The normalized difference vegetation index (NDVI) is used as an example. If an NDVI value is 0, it is determined that the surface is rock or bare soil without grass cover. If the NDVI value is greater than 0, NDVI values are different because of different vegetation coverage and vegetation types. For a normal working surface of the autonomous lawnmower 1, a specific interval may be set to determine a lawn/non-lawn.

In an embodiment, the surface recognition module 9 includes a radar sensor, mounted above or in front of the housing 21, and detecting the surface traveled by the autonomous lawnmower 1 by transmitting and receiving an electromagnetic wave. In this embodiment, the radar sensor transmits and receives a millimeter wave, so that a water surface and a hard surface such as a tree root or a road surface can be detected, but grassed soil and grassless soil cannot be distinguished. Therefore, for a case that the non-working surface is a hard surface, the radar sensor may be used for detection, to distinguish the working surface from the non-working surface.

In an embodiment, the surface recognition module 9 includes an image sensor, mounted above or in front of the housing 21, capturing an image of the surface traveled by the autonomous lawnmower 1, and detecting a lawn and a non-lawn by recognizing a feature such as color and texture. In some embodiments, the control module 19 processes, by using a deep learning algorithm, a detection signal sent by the image sensor, to recognize surfaces such as a lawn, a flower bed, and a road with different characteristics.

In an embodiment, the surface recognition module 9 includes an image sensor mounted on a longitudinal axis of the housing 21, and a detection area of the image sensor is symmetrical with respect to the longitudinal axis. In this embodiment, the longitudinal axis is a central axis of the housing 21, and in other embodiments, the longitudinal axis may be another axis parallel to the central axis. Therefore, the moving direction of the autonomous lawnmower 1 in an image shot by the image sensor coincides with a longitudinal axis of the image. The control module 19 may distinguish the working surface from the non-working surface according to a signal detected by the image sensor, and may further determine a position relationship between the image sensor and the boundary 3, the position relationship including a distance relationship, an angle relationship, and the like. If the moving direction of the autonomous lawnmower 1 forms an acute angle with the boundary 3 in the clockwise direction in the image, it means that the autonomous lawnmower 1 is close to the boundary 3, and the moving direction of the autonomous lawnmower 1 forms an acute angle with the boundary 3 in the clockwise direction. That is, an angle relationship between the boundary 3 and the autonomous lawnmower 1 in the image is consistent. In addition, a proportion of the non-working surface in the image shot by the image sensor is directly correlated to a distance between the autonomous lawnmower 1 and the boundary 3. According to a mounting height and angle of the image sensor, the distance between the autonomous lawnmower 1 and the boundary 3 may be recognized. Therefore, the control module 19 may determine, according to the detection signal sent by the image sensor, whether the autonomous lawnmower 1 and the boundary 3 meet the preset position relationship, control the traveling module 17 to steer in a case that the preset position relationship is met, and control a specific steering manner based on the angle relationship between the autonomous lawnmower 1 and the boundary 3.

As described above, if the autonomous lawnmower 1 steers after encountering the boundary 3, danger may occur when the autonomous lawnmower enters the non-working area during steering. Therefore, the control module 19 needs to control the autonomous lawnmower 1 to remain in the working area 7. As shown in FIG. 3, in an embodiment, the distance between a detection area of the surface recognition module 9 and the traveling module 17 is greater than a first preset distance. When the surface recognition module 9 detects the non-working surface, the control module 19 may determine a position relationship between the boundary 3 and the traveling module 17 through a detection signal sent by the surface recognition module, and control the traveling module 17 according to the position relationship to steer. Generally, in the case of the same steering angle and speed, in a direction perpendicular to the boundary 3, a maximum distance required for steering may be determined, and the first preset distance is greater than or equal to the maximum distance, so as to ensure that the traveling module 17 does not exceed the boundary 3 during steering. On the other hand, if the detection area of the surface recognition module 9 is excessively far away from the traveling module 17, the autonomous lawnmower 1 detects the non-working surface prematurely, and as a result the control module 19 may fail to accurately recognize the position relationship between the autonomous lawnmower 1 and the boundary 3. Therefore, when the first preset distance is slightly greater than or equal to the maximum distance, the working safety of the autonomous lawnmower 1 can be ensured, and a coverage rate of the autonomous lawnmower 1 in the working area 7 can be ensured. In this embodiment, the distance between the detection area of the surface recognition module 9 and the traveling module 17 is between 20 cm and 80 cm.

Continuing to refer to FIG. 3, in an embodiment, an angle between a detection angle of the surface recognition module 9 and the height direction meets a preset angle range. If a mounting height of the surface recognition module 9 is determined, a specific detection angle corresponds to a specific detection area. The surface recognition module 9 is mounted to the housing 21. The housings 21 of different models of autonomous lawnmowers 1 have different sizes, traveling speeds are different, different safety distances are required for steering the traveling module 17, and corresponding detection angles are also different. If the angle between the detection angle and the height direction is excessively small, it cannot be ensured that the autonomous lawnmower 1 travels in the working area 7. If the angle between the detection angle and the height direction is excessively large, a distance between the surface recognition module 9 and a detected surface is excessively large, the recognition accuracy of the surface recognition module 9 may be affected, and the determination of the control module 19 on the position relationship between the autonomous lawnmower 1 and the boundary 3 may further be affected. Therefore, it is necessary to determine an appropriate detection angle according to the size of the housing 21, a mounting position of the surface recognition module 9, and the like. In this embodiment, the angle between the detection angle and the height direction of the surface recognition module 9 is less than 75 degrees and greater than 30 degrees.

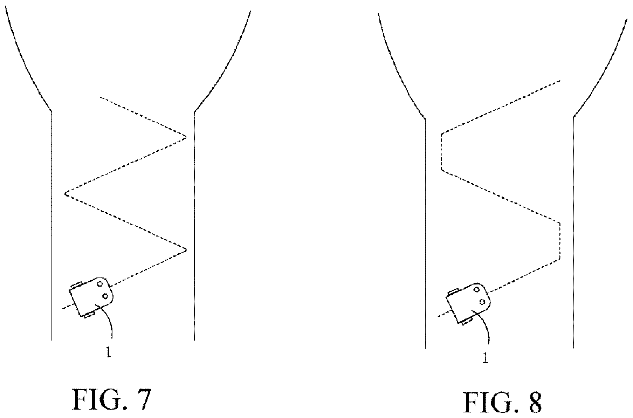

It should be noted that a steering manner of the present invention is particularly beneficial during the passage in a narrow area. As shown in FIG. 7, after a path planning manner is used, an autonomous lawnmower1 has directivity and may leave the narrow area after a limited number of times of moving back and forth. According to an actual calculation, it takes an average of 5 minutes to leave a typical narrow area without using the method, and when this method is used, it takes only half a minute.

As shown in FIG. 8, in an embodiment, to further optimize the speed of leaving the narrow area, the specific implementation of the present invention further provides another path planning manner. Such path planning manner implements fast departure from the narrow area by traveling a particular distance along the boundary 3 after the boundary 3 is encountered. After approaching the boundary 3, the autonomous lawnmower 1 first slightly rotates to enable a traveling direction to be consistent with an extension direction of the boundary 3, and then travels a preset distance in the extension direction of the boundary 3, and then steers inside the boundary 3 again. That is, after steering starts and before steering is completed, the autonomous lawnmower 1 travels a particular distance along the boundary. A specific manner of traveling a particular distance may be a preset time or a second preset distance of traveling of the autonomous lawnmower 1, and the preset distance is preferably 20 cm to 100 cm.

In an embodiment, the autonomous lawnmower 1 includes a surface recognition sensor mounted on a side surface of the housing 21 for detecting a traveling surface of the traveling module 17 on a side close to the boundary 3. The control module 19 acquires a surface in front of the traveling module 17 and a surface on an outer side of the traveling module 17 according to a detection result of the surface recognition module 9, and adjusts a moving direction of the traveling module 17. In a traveling process of the autonomous lawnmower 1, if the control module 19 receives the signal that is sent by the surface recognition module 9 and indicates that the non-working surface is detected, the position relationship between the autonomous lawnmower 1 and the boundary 3 is determined, and if the autonomous lawnmower 1 and the boundary 3 meet the preset position relationship, the traveling module 17 is controlled to steer. If the moving direction of the autonomous lawnmower 1 forms an acute angle with the boundary 3, the autonomous lawnmower rotates clockwise by an acute angle, so that a surface detected by the surface recognition module 9 is a working surface, and a surface detected by the surface recognition sensor is a non-working surface, so that the autonomous lawnmower 1 travels a third preset distance along an inner side of the boundary 3. Next, an acute angle is rotated clockwise again, so that the autonomous lawnmower 1 travels inside the working area 7, and an angle between the moving direction of the autonomous lawnmower 1 and the boundary 3 is an acute angle.

The present invention is not limited to the structures of the specific embodiments described herein, and structures based on the concepts of the present invention shall fall within the protection scope of the present invention.

## Claims

1. An autonomous lawnmower (1), traveling and working in a working area (7), and comprising:
a housing (21), comprising a front portion in a moving direction of the autonomous lawnmower (1);
a traveling module (17), mounted in the housing (21), configured for driving the autonomous lawnmower (1) to travel and steer, the traveling module comprising two drive wheels, each connected to an independent drive motor, whereby during steering, the drive motors drive the two drive wheels at different speeds or in different directions;
a surface recognition module (9), mounted in the housing (21), configured for detecting a surface traveled by the autonomous lawnmower (1), a detection area of the surface recognition module (9) comprising a surface in front of the traveling module (17), a surface in the working area (7) being a working surface, a surface outside the working area (7) being a non-working surface, a boundary (3) of the working area (7) being formed between the working surface and the non-working surface;
an energy module (33), mounted in the housing (21), to supply energy to the autonomous lawnmower (1); and
a control module (19), electrically connected to the traveling module (17) and the surface recognition module (9), configured for determining a position relationship between the autonomous lawnmower (1) and the boundary (3) according to a signal sent by the surface recognition module (9), if a preset position relationship is met, enabling the traveling module (17) to perform steering to travel into the working area (7);
wherein a maximum distance required for steering is determined in the case when the two drive motors rotate at the same speed and in the same direction perpendicular to the boundary (3), and the distance between the detection area and the travelling module is greater than a first preset distance which is greater than or equal to the maximum distance; and
if the moving direction forms an acute angle with the boundary (3) in the clockwise direction, steering is clockwise, so that when steering is completed, the moving direction forms an acute angle with the boundary (3) in the counterclockwise direction, and if the moving direction forms an obtuse angle with the boundary (3) in the clockwise direction, steering is counterclockwise, so that when steering is completed, the moving direction forms an obtuse angle with the boundary (3) in the counterclockwise direction.

2. The autonomous lawnmower (1) according to claim 1, wherein the surface recognition module (9) is configured to recognize a lawn.

3. The autonomous lawnmower of claim 2 wherein the surface recognition module comprises a surface recognition sensor, and the surface recognition sensor (11,13) comprises at least one of an optical sensor, a radar sensor, a capacitive sensor, and an image sensor.

4. The autonomous lawnmower (1) according to claim 1, configured such that during steering, the control module (19) controls the traveling module (17) to keep traveling in the working area (7).

5. The autonomous lawnmower (1) according to claim 3, configured such that according to a signal that is sent by the surface recognition module (9) and indicating that the non-working surface is detected, the control module (19) controls the traveling module (17) to reverse a second preset distance and then steer.

6. The autonomous lawnmower (1) according to claim 1, wherein the surface recognition module (9) comprises an image sensor, and the control module (19) is configured to determine an angle relationship between the moving direction and the boundary (3) in the clockwise direction according to a relative relationship, detected by the image sensor, between the axis and the boundary (3).

7. The autonomous lawnmower (1) according to claim 1, configured such that an angle of steering is less than 180 degrees and greater than or equal to 90 degrees.

8. A steering method of an autonomous lawnmower (1) comprising a housing (21), comprising a front portion in a moving direction of the autonomous lawnmower (1); a traveling module (17), mounted in the housing (21), configured for driving the autonomous lawnmower (1) to travel and steer; and a surface recognition module (9), mounted in the housing (21), wherein the autonomous lawnmower (1) is configured to travel and work in a working area (7) defined by a boundary (3) formed by a lawn and a non-lawn, a surface in the working area (7) is a lawn, and the method comprises the following steps:
determining a maximum distance required for steering in the case when the two drive motors rotate at the same speed and in the same direction perpendicular to the boundary (3), and arranging the distance between the detection area and the travelling module to be greater than a first preset distance which is greater than or equal to the maximum distance;
traveling, by the autonomous lawnmower (1), to the boundary (3);
detecting a surface traveled by the autonomous lawnmower (1);
determining a position relationship between the autonomous lawnmower (1) and the boundary (3) based on the detection of a non-lawn; and
determining an angle relationship between the autonomous lawnmower (1) and the boundary (3), when the position relationship between the autonomous lawnmower (1) and the boundary (3) meets a preset position relationship, wherein
controlling steering according to the angle relationship to enable the autonomous lawnmower (1) to travel into the working area (7), such that if a moving direction of the autonomous lawnmower (1) forms an acute angle with the boundary (3) in the clockwise direction, steering is clockwise, so that when steering is completed, the moving direction forms an acute angle with the boundary (3) in the counterclockwise direction, and if the moving direction forms an obtuse angle with the boundary (3) in the clockwise direction, steering is counterclockwise, so that when steering is completed, the moving direction forms an obtuse angle with the boundary (3) in the counterclockwise direction.

9. The steering method according to claim 8, wherein after steering is started and before steering is completed, the autonomous lawnmower (1) travels a second preset distance along an inner side of the boundary (3).

## Patentansprüche

1. Autonomer Rasenmäher (1), der in einem Arbeitsbereich (7) fährt und arbeitet und Folgendes umfasst:
ein Gehäuse (21), das in einer Bewegungsrichtung des autonomen Rasenmähers (1) einen Frontabschnitt umfasst;
ein Fahrmodul (17), das im Gehäuse (21) montiert und zum Antreiben des autonomen Rasenmähers (1) zum Fahren und Lenken ausgelegt ist, wobei das Fahrmodul zwei Antriebsräder umfasst, von denen jedes mit einem unabhängigen Antriebsmotor verbunden ist, wodurch während des Lenkens die Antriebsmotoren die zwei Antriebsräder mit verschiedenen Geschwindigkeiten und in verschiedene Richtungen antreiben;
ein Flächenerkennungsmodul (9), das im Gehäuse (21) montiert und zum Detektieren einer Fläche, auf der der autonome Rasenmäher (1) fährt, ausgelegt ist, wobei ein Detektionsbereich des Flächenerkennungsmoduls (9) eine Fläche vor dem Fahrmodul (17) umfasst, wobei eine Fläche im Arbeitsbereich (7) eine Arbeitsfläche ist, wobei eine Fläche außerhalb des Arbeitsbereichs (7) eine Nichtarbeitsfläche ist, wobei zwischen der Arbeitsfläche und der Nichtarbeitsfläche eine Grenze (3) des Arbeitsbereichs (7) gebildet ist;
ein Energiemodul (33), das im Gehäuse (21) montiert ist, zum Versorgen des autonomen Rasenmähers (1) mit Energie und
ein Steuermodul (19), das elektrisch mit dem Fahrmodul (17) und dem Flächenerkennungsmodul (9) verbunden und zum Bestimmen einer Positionsbeziehung zwischen dem autonomen Rasenmäher (1) und der Grenze (3) gemäß einem vom Flächenerkennungsmodul (9) gesendeten Signals ausgelegt ist, wobei, wenn eine voreingestellte Positionsbeziehung erfüllt ist, es dem Fahrmodul (17) ermöglicht wird, zum Fahren im Arbeitsbereich (7) eine Lenkung durchzuführen;
wobei in dem Fall, in dem sich die zwei Antriebsmotoren mit derselben Geschwindigkeit und in dieselbe Richtung senkrecht zur Grenze (3) drehen und die Distanz zwischen dem Detektionsbereich und dem Fahrmodul größer ist als eine erste voreingestellte Distanz, die größer als oder gleich einer maximalen Distanz ist, die zum Lenken erforderliche maximale Distanz bestimmt wird; und
wenn die Bewegungsrichtung in der Uhrzeigersinnrichtung einen spitzen Winkel mit der Grenze (3) bildet, das Lenken im Uhrzeigersinn erfolgt, derart, dass, wenn das Lenken abgeschlossen ist, die Bewegungsrichtung in der Gegenuhrzeigersinnrichtung einen spitzen Winkel mit der Grenze (3) bildet, und wenn die Bewegungsrichtung in der Uhrzeigersinnrichtung einen stumpfen Winkel mit der Grenze (3) bildet, das Lenken im Gegenuhrzeigersinn erfolgt, derart, dass, wenn das Lenken abgeschlossen ist, die Bewegungsrichtung in der Gegenuhrzeigersinnrichtung einen stumpfen Winkel mit der Grenze (3) bildet.

2. Autonomer Rasenmäher (1) nach Anspruch 1, wobei das Flächenerkennungsmodul (9) dazu ausgelegt ist, einen Rasen zu erkennen.

3. Autonomer Rasenmäher nach Anspruch 2, wobei das Flächenerkennungsmodul einen Flächenerkennungssensor umfasst und der Flächenerkennungssensor (11, 13) mindestens eines von einem optischen Sensor, einem Radarsensor, einem kapazitiven Sensor und einem Bildsensor umfasst.

4. Autonomer Rasenmäher (1) nach Anspruch 1, der derart ausgelegt ist, dass das Steuermodul (19) während des Lenkens das Fahrmodul (17) steuert, um das Fahren im Arbeitsbereich (7) beizubehalten.

5. Autonomer Rasenmäher (1) nach Anspruch 3, der derart ausgelegt ist, dass das Steuermodul (19) gemäß einem Signal, das vom Flächenerkennungsmodul (9) gesendet wird und anzeigt, dass die Nichtarbeitsfläche detektiert ist, das Fahrmodul (17) steuert, um um eine zweite voreingestellte Distanz zurückzufahren und dann zu lenken.

6. Autonomer Rasenmäher (1) nach Anspruch 1, wobei das Flächenerkennungsmodul (9) einen Bildsensor umfasst, und das Steuermodul (19) dazu ausgelegt ist, zwischen der Bewegungsrichtung und der Grenze (3) in der Uhrzeigersinnrichtung gemäß einer relativen Beziehung, die vom Bildsensor zwischen der Achse und der Grenze (3) detektiert wird, eine Winkelbeziehung zu bestimmen.

7. Autonomer Rasenmäher (1) nach Anspruch 1, der derart ausgelegt ist, dass ein Lenkwinkel kleiner als 180 Grad oder größer als oder gleich 90 Grad ist.

8. Lenkverfahren eines autonomen Rasenmähers (1), der ein Gehäuse (21) umfasst, das in einer Bewegungsrichtung des autonomen Rasenmähers (1) einen Frontabschnitt; wobei ein Fahrmodul (17), das im Gehäuse (21) montiert ist, zum Antreiben des autonomen Rasenmähers (1) zum Fahren und Lenken ausgelegt ist; und ein Flächenerkennungsmodul (9), das im Gehäuse (21) montiert ist, umfasst, wobei der autonome Rasenmäher (1) dazu ausgelegt ist, in einem Arbeitsbereich (7) zu fahren und zu arbeiten, der durch eine Grenze (3) definiert ist, die durch einen Rasen und einen Nichtrasen gebildet wird, eine Fläche im Arbeitsbereich (7) ein Rasen ist und das Verfahren die folgenden Schritte umfasst:
Bestimmen einer zum Lenken erforderlichen maximalen Distanz in dem Fall, in dem sich die zwei Antriebsmotoren mit derselben Geschwindigkeit und in dieselbe Richtung senkrecht zur Grenze (3) drehen und Anordnen der Distanz zwischen dem Detektionsbereich und dem Fahrmodul als größer als eine erste voreingestellte Distanz, die größer als oder gleich einer maximalen Distanz ist;
Fahren des autonomen Rasenmähers (1) zur Grenze (3); Detektieren einer vom autonomen Rasenmäher (1) befahrenen Fläche;
Bestimmen einer Positionsbeziehung zwischen dem autonomen Rasenmäher (1) und der Grenze (3) auf Basis der Detektion eines Nichtrasens und
Bestimmen einer Winkelbeziehung zwischen dem autonomen Rasenmäher (1) und der Grenze (3), wenn die Positionsbeziehung zwischen dem autonomen Rasenmäher (1) und der Grenze (3) eine voreingestellte Positionsbeziehung erfüllt, wobei
beim Lenken gemäß der Winkelbeziehung, um es dem autonomen Rasenmäher (1) zu ermöglichen, in den Arbeitsbereich (7) zu fahren, derart, dass, wenn eine Bewegungsrichtung des autonomen Rasenmähers (1) in der Uhrzeigersinnrichtung einen spitzen Winkel mit der Grenze (3) bildet, das Lenken im Uhrzeigersinn erfolgt, derart, dass, wenn das Lenken abgeschlossen ist, die Bewegungsrichtung in der Gegenuhrzeigersinnrichtung einen spitzen Winkel mit der Grenze (3) bildet, und wenn die Bewegungsrichtung in der Uhrzeigersinnrichtung einen stumpfen Winkel mit der Grenze (3) bildet, das Lenken im Gegenuhrzeigersinn erfolgt, derart, dass, wenn das Lenken abgeschlossen ist, die Bewegungsrichtung in der Gegenuhrzeigersinnrichtung einen stumpfen Winkel mit der Grenze (3) bildet.

9. Lenkverfahren nach Anspruch 8, wobei der autonome Rasenmäher (1), nachdem das Lenken gestartet wurde und bevor das Lenken abgeschlossen ist, eine zweite voreingestellte Distanz entlang einer Innenseite der Grenze (3) fährt.

## Revendications

1. Tondeuse à gazon autonome (1), se déplaçant et fonctionnant dans une zone de travail (7), et comprenant :
un boîtier (21), comprenant une partie avant dans une direction de déplacement de la tondeuse à gazon autonome (1) ;
un module de déplacement (17), monté dans le boîtier (21), configuré pour entraîner la tondeuse à gazon autonome (1) pour qu'elle se déplace et s'oriente, le module de déplacement comprenant deux roues d'entraînement, chacune reliée à un moteur d'entraînement indépendant, moyennant quoi pendant la direction, les moteurs d'entraînement entraînent les deux roues d'entraînement à des vitesses différentes ou dans des directions différentes ;
un module de reconnaissance de surface (9), monté dans le boîtier (21), configuré pour détecter une surface parcourue par la tondeuse à gazon autonome (1), une zone de détection du module de reconnaissance de surface (9) comprenant une surface devant le module de déplacement (17), une surface dans la zone de travail (7) étant une surface de travail, une surface à l'extérieur de la zone de travail (7) étant une surface de non-travail, une limite (3) de la zone de travail (7) étant formée entre la surface de travail et la surface de non-travail ;
un module d'énergie (33), monté dans le boîtier (21), pour fournir de l'énergie à la tondeuse à gazon autonome (1) ; et
un module de commande (19), relié électriquement au module de déplacement (17) et au module de reconnaissance de surface (9), configuré pour déterminer une relation de position entre la tondeuse à gazon autonome (1) et la limite (3) en fonction d'un signal envoyé par le module de reconnaissance de surface (9), si une relation de position prédéfinie est satisfaite, permettant au module de déplacement (17) d'effectuer la direction pour se déplacer dans la zone de travail (7) ;
dans laquelle une distance maximale requise pour la direction est déterminée dans le cas où les deux moteurs d'entraînement tournent à la même vitesse et dans la même direction perpendiculaire à la limite (3), et la distance entre la zone de détection et le module de déplacement est supérieure à une première distance prédéfinie qui est supérieure ou égale à la distance maximale ; et
si la direction de déplacement forme un angle aigu avec la limite (3) dans le sens des aiguilles d'une montre, la direction est dans le sens des aiguilles d'une montre, de sorte que lorsque la direction est achevée, la direction de déplacement forme un angle aigu avec la limite (3) dans le sens inverse des aiguilles d'une montre, et si la direction de déplacement forme un angle obtus avec la limite (3) dans le sens des aiguilles d'une montre, la direction est dans le sens inverse des aiguilles d'une montre, de sorte que lorsque la direction est achevée, la direction de déplacement forme un angle obtus avec la limite (3) dans le sens inverse des aiguilles d'une montre.

2. Tondeuse à gazon autonome (1) selon la revendication 1, dans laquelle le module de reconnaissance de surface (9) est configuré pour reconnaître un gazon.

3. Tondeuse à gazon autonome selon la revendication 2, dans laquelle le module de reconnaissance de surface comprend un capteur de reconnaissance de surface, et le capteur de reconnaissance de surface (11, 13) comprend au moins l'un d'un capteur optique, d'un capteur radar, d'un capteur capacitif, et d'un capteur d'image.

4. Tondeuse à gazon autonome (1) selon la revendication 1, configurée de telle sorte que pendant la direction, le module de commande (19) commande le module de déplacement (17) pour maintenir un déplacement dans la zone de travail (7).

5. Tondeuse à gazon autonome (1) selon la revendication 3, configurée de telle sorte qu'en fonction d'un signal qui est envoyé par le module de reconnaissance de surface (9) et indiquant que la surface de non-travail est détectée, le module de commande (19) commande le module de déplacement (17) pour inverser une seconde distance prédéfinie, puis effectuer la direction.

6. Tondeuse à gazon autonome (1) selon la revendication 1, dans laquelle le module de reconnaissance de surface (9) comprend un capteur d'image, et le module de commande (19) est configuré pour déterminer une relation d'angle entre la direction de déplacement et la limite (3) dans le sens des aiguilles d'une montre en fonction d'une relation relative, détectée par le capteur d'image, entre l'axe et la limite (3).

7. Tondeuse à gazon autonome (1) selon la revendication 1, configurée de telle sorte qu'un angle de direction est inférieur à 180 degrés et supérieur ou égal à 90 degrés.

8. Procédé de direction d'une tondeuse à gazon autonome (1) comprenant un boîtier (21), comprenant une partie avant dans une direction de déplacement de la tondeuse à gazon autonome (1) ; un module de déplacement (17), monté dans le boîtier (21), configuré pour entraîner la tondeuse à gazon autonome (1) pour qu'elle se déplace et s'oriente ; et un module de reconnaissance de surface (9), monté dans le boîtier (21), dans lequel la tondeuse à gazon autonome (1) est configurée pour se déplacer et fonctionner dans une zone de travail (7) définie par une limite (3) formée par un gazon et un non-gazon, une surface dans la zone de travail (7) étant un gazon, et le procédé comprenant les étapes suivantes :
la détermination d'une distance maximale requise pour la direction dans le cas où les deux moteurs d'entraînement tournent à la même vitesse et dans la même direction perpendiculaire à la limite (3), et l'agencement de la distance entre la zone de détection et le module de déplacement pour qu'elle soit supérieure à une première distance prédéfinie qui est supérieure ou égale à la distance maximale ;
le déplacement, par la tondeuse à gazon autonome (1), jusqu'à la limite (3) ;
la détection d'une surface parcourue par la tondeuse à gazon autonome (1) ;
la détermination d'une relation de position entre la tondeuse à gazon autonome (1) et la limite (3) sur la base de la détection d'un non-gazon ; et
la détermination d'une relation d'angle entre la tondeuse à gazon autonome (1) et la limite (3), lorsque la relation de position entre la tondeuse à gazon autonome (1) et la limite (3) satisfait une relation de position prédéfinie, dans lequel
la commande de la direction en fonction de la relation d'angle pour permettre à la tondeuse à gazon autonome (1) de se déplacer dans la zone de travail (7), de telle sorte que si une direction de déplacement de la tondeuse à gazon autonome (1) forme un angle aigu avec la limite (3) dans le sens des aiguilles d'une montre, la direction est dans le sens des aiguilles d'une montre, de sorte que lorsque la direction est achevée, la direction de déplacement forme un angle aigu avec la limite (3) dans le sens inverse des aiguilles d'une montre, et si la direction de déplacement forme un angle obtus avec la limite (3) dans le sens des aiguilles d'une montre, la direction est dans le sens inverse des aiguilles d'une montre, de sorte que lorsque la direction est achevée, la direction de déplacement forme un angle obtus avec la limite (3) dans le sens inverse des aiguilles d'une montre.

9. Procédé de direction selon la revendication 8, dans lequel après que la direction est commencée et avant que la direction soit achevée, la tondeuse à gazon autonome (1) se déplace d'une seconde distance prédéfinie le long d'un côté interne de la limite (3).
